# FASCICULE DE BREVET EUROPEEN

(11) **EP 2 017 222 B1**
(45) Date de publication et mention de la délivrance du brevet: **15.08.2012**
(21) Numéro de dépôt: 08290602.5
(22) Date de dépôt: 24.06.2008
(51) Int. Cl.: C01B 3/12, C01B 3/50

(54) **Nouveau procédé de purification d'hydrogène utilisant une combinaison d'unités de séparation sur membranes**
Neues Verfahren zur Wasserstoffreinigung mit Hilfe einer Kombination aus Separationseinheiten auf Membranen
New method of purifying hydrogen using a combination of separation units on membranes

(30) Priorité: 20.07.2007 FR 0705317
(43) Date de publication de la demande: 21.01.2009
(73) Titulaire: IFP Energies nouvelles, 92852 Rueil-Malmaison Cedex (FR)
(72) Inventeur: Giroudière, Fabrice, 69530 Orlienas (FR); Jolimaitre, Elsa, 69001 Lyon (FR); Boudet, Nicolas, 69630 Chaponost (FR); Rodeschini, Hélène, 69003 Lyon (FR)

(56) Documents cités:
- FR-A- 2 867 464
- US-A- 5 873 928
- US-A1- 2003 223 931
- US-A1- 2004 230 085
- US-B1- 6 179 900
- CHIAPPETTA ET AL: "Design of an integrated membrane system for a high level hydrogen purification" CHEMICAL ENGINEERING JOURNAL, ELSEVIER SEQUOIA, LAUSANNE, CH, vol. 124, no. 1-3, 1 novembre 2006 (2006-11-01), pages 29-40, XP005711554 ISSN: 1385-8947
- HAN J ET AL: "Metal membrane-type 25-kW methanol fuel processor for fuel-cell hybrid vehicle" JOURNAL OF POWER SOURCES, ELSEVIER, AMSTERDAM, NL, vol. 112, no. 2, 14 novembre 2002 (2002-11-14), pages 484-490, XP004391010 ISSN: 0378-7753

## Description

### Domaine de l'invention

La présente invention concerne le domaine de la production d'hydrogène à haut niveau de pureté, plus particulièrement en vue de son utilisation dans une pile à combustible (PAC). D'autres applications de l'hydrogène à haute pureté produit par le présent procédé sont également possibles dans le domaine de l'électronique, de l'agroalimentaire pour le traitement de certaines huiles, et dans la propulsion spatiale.

L'hydrogène utilisée dans une pile à combustible doit répondre à certaines spécifications et notamment à une spécification sur la teneur en monoxyde de carbone qui doit être inférieure à 150 ppm, et préférentiellement inférieure à 100 ppm pour les dernières générations de piles.

Une autre caractéristique du procédé selon la présente invention est sa flexibilité au sens de son aptitude à répondre à des fonctionnements intermittents et des marches non stationnaires.

De manière générale, le procédé de purification décrit dans la présente demande se place en aval d'un procédé de vaporeformage d'une coupe pétrolière ou de gaz naturel qui génère un gaz essentiellement constitué de monoxyde de carbone, d'hydrogène (H₂) et de dioxyde de carbone ( CO₂).

Ce gaz, communément appelé gaz de synthèse, contient de l'ordre de 10 % en volume de CO, et nécessite une étape ultérieure de conversion du CO en CO₂ (notée en abrégé WGS en raison de son appellation anglo saxonne "water gaz shift").

Cette réaction de conversion du CO est favorisée à basse température et se déroule souvent en deux étapes dite pour la première "haute température", et pour la seconde "basse température". A l'issue de la seconde étape, la teneur en CO dans l'effluent gazeux est d'environ 0,5 % volume.

Pour abaisser la teneur en CO à des valeurs de l'ordre de la centaine de ppm, Il est donc nécessaire de réaliser une purification finale qui est généralement obtenue soit dans un procédé catalytique de type oxydation préférentielle (PROX), soit dans un procédé d'adsorption, généralement un procédé de type PSA, soit enfin dans un procédé de séparation sur membrane.

La présente invention concerne un procédé de séparation sur membrane, la membrane utilisée étant de type polymère, le procédé étant situé en aval de la seule étape de conversion haute température, car le procédé permet de supprimer l'étape de WGS basse température.

Le procédé selon l'invention s'applique donc en aval de tout procédé de production du gaz de synthèse, que celui-ci soit obtenu par vaporeformage d'une coupe pétrolière, ou par oxydation partielle, ou par une combinaison quelconque de ces deux procédés (appelé procédé autotherme).

Bien entendu, le procédé selon la présente invention est compatible avec n'importe quelle charge utilisée dans le procédé de production du gaz de synthèse situé en amont.

Un des avantages de la présente invention réside dans la flexibilité de la teneur en CO qui peut être adaptée aux exigences des différents types de piles à combustible. En particulier, la présente invention permet d'atteindre une teneur en CO inférieure à 100 ppm, voire même inférieure à 50 ppm.

### Examen de l'art antérieur

L'art antérieur dans le domaine de la purification d'hydrogène sur membrane est assez fourni, mais très peu de ces procédés utilisent des membranes de type polymère.

Le brevet US 6350297 B1 décrit un procédé de purification d'hydrogène provenant d'un mélange de gaz de reformage, utilisant une membrane à diffusion d'H₂ ainsi qu'un catalyseur de méthanation associé à cette membrane, pour une application pile à combustible.

Le type de membrane utilisé dans ce brevet, dite membranes synthétiques perméable à l'H₂. a été développé pour la séparation et la purification de l'hydrogène.

La technique de purification est ici basée sur la diffusion sélective de l'H₂ au travers d'un faisceau de fibres creuses faites d'un alliage Pd/Ag.

Cette technique présente un certain nombre d'inconvénients;

La pression de travail doit être élevée, et les taux de transfert au travers de la membrane sont généralement assez faibles. Des améliorations ont pu être apportées, en déposant un alliage Pd/Ag sur un substrat de céramique. Cet alliage métallique peut alors être plus fin d'où une réduction des coûts et une augmentation du transfert au travers de la membrane à une pression donnée.

La membrane à diffusion d'hydrogène décrite dans le brevet cité consiste en un film de Pd/Ag de 7,5 microns d'épaisseur déposé sur un tube d'alumine.

Le procédé selon la présente invention ne fait pas appel à des membranes à diffusion d'hydrogène, mais à des membranes polymères, peu coûteuses, et faciles à mettre en oeuvre.

De plus, dans le brevet cité, un catalyseur de méthanation est associé à la membrane pour éliminer les oxydes de carbone. Le procédé selon la présente invention n'a pas besoin d'étape de méthanation.

Le brevet WO 1999046032 décrit une méthode et un appareil destiné à la purification d'hydrogène provenant d'un reformeur ou d'un brûleur d'oxydation.

Les membranes utilisées dans ce brevet sont:
- des membranes de diffusion d'hydrogène, de type palladium, qui travaille à des températures généralement élevées de manière à maximiser le taux de transfert.
- des membranes céramiques (zircone ou zircone stabilisée).
- des membranes conductrices d'anions, comme par exemple l'ion oxygène, qui peut être en zircone.
- des membranes conductrices à la fois d'ions oxygène, et d'électrons.
- des membranes céramiques conductrices d'oxygène.

La présente invention se distingue du brevet cité en ce que les membranes utilisées dans le procédé objet de l'invention sont des membranes de type polymère, et que la température opératoire est notablement plus faible que celle décrite dans le brevet cité (650-1000°C).

Le brevet EP1207132 A1 décrit un procédé de production d'hydrogène à partir la gazéification de divers combustibles, qui comprend notamment:
- une pile à combustible, avec membrane échangeuse d'ions
- une étape de shift pour convertir CO
- une étape de méthanation
- une étape de séparation membranaire sans que la nature de la membrane ne soit précisée.

Le procédé selon la présente invention ne présente pas d'étape de méthanation.

Le brevet WO 2004031073 décrit un procédé de reformage et de purification d'hydrogène, comprenant une membrane sélective à l'hydrogène, et destiné à alimenter une pile à combustible.

La membrane peut être appliquée au traitement du flux complet ou bien seulement à une partie de celui-ci. La membrane peut être un tamis moléculaire inorganique, un métal pur, un alliage de métaux, ou bien un tamis moléculaire combiné avec un alliage de métaux ou un métal pur. L'épaisseur du module (membrane + support) est comprise entre 0,1 et 100 microns.

Le rétentat qui ne traverse pas la membrane, est renvoyé au brûleur pour produire la chaleur nécessaire à la production d'hydrogène.

Le procédé décrit dans ce document n'utilise pas de membranes polymères.

Le document US 6579331 B1 décrit un procédé permettant de retirer sélectivement le CO₂, contenu dans un gaz de synthèse ce qui permet un enrichissement en H₂. Le procédé décrit est présenté comme plus avantageux qu'une membrane sélective au H₂, en terme de pression nécessaire.

La membrane sélective à CO₂ est composée d'un polymère hydrophile (= polyvinylalcool, poly-vinylpyrrolidone, poly-éthylènoxyde, poly-propylèneoxyde, poly-acrylamide, poly-vinylacétate, et mélange et copolymères), et d'au moins un sel d'halogène ayant la formule R4N⁺X⁻ (et aussi d'un agent liant).

Il s'agit donc d'une membrane sélective à CO₂ et non pas à H₂. De plus, le schéma intègre un méthaniseur, ce qui n'est pas le cas du procédé selon la présente invention.

Le document de Chiappetta et al intitulé " Design of an Integrated Membrane System for a High Level Hydrogen Purification" paru dans Chemical Engineering Journal, Elsevier sequoia, Lausanne, CH vol 124, N° 1-3, le 1 novembre 2006, pages 29 à 40, décrit un procédé de purification d'hydrogène contenu dans un flux de gaz de synthèse dans lequel plusieurs unités de séparation par membrane sont utilisées (Fig 6 page 36), et dans lequel jusqu'à 90% de l'hydrogène est récupéré ( page 31 au bas de la colonne 1), procédé dans lequel l'hydrogène est envoyé vers une pile à combustible et dans lequel aucune étape de méthanation n'est mise en oeuvre( pages 29-31).

Le procédé décrit dans le document de Chippetta n'enseigne pas une cascade de 3 unités de séparation par membrane dans laquelle il y a des flux qui sont recyclés, ni que chaque membrane peut être de type polymère. Les conditions opératoires de chaque unité de séparation par membrane ne sont également pas divulguées par le document de Chiappetta.

### Description sommaire des figures

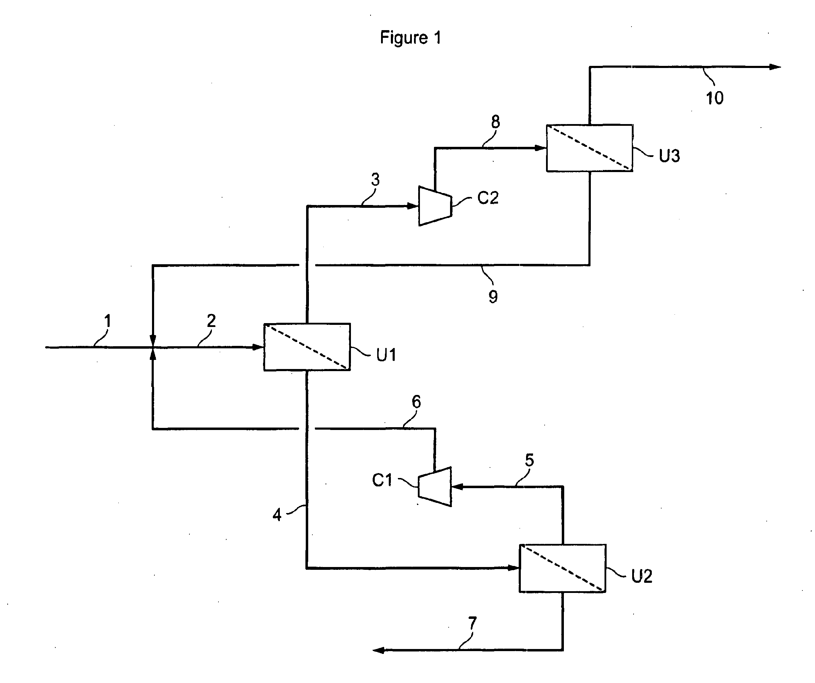

La figure 1 représente un schéma du procédé selon l'invention dans lequel on utilise 3 unités de séparation sur membranes, le procédé étant placé en aval d'une unité de WGS haute température. Le procédé selon l'invention permet de supprimer l'unité de WGS basse température.

### Description sommaire de l'invention

Le procédé selon la présente invention peut se définir comme un procédé de purification d'hydrogène contenu dans un gaz de synthèse après passage dans une unité de WGS haute température, ledit gaz de synthèse contenant moins de 5000 ppm de CO.

Le procédé selon l'invention fait appel à au moins trois unités de séparation sur membrane.

La différence de pression entre l'amont et l'aval de chaque unité de séparation par membrane est généralement comprise entre 5 et 50 bars, et préférentiellement comprise entre 10 et 30 bars (1 bar = 10⁵ pascal).

La membrane de chacune des unités de séparation est une membrane polymère, préférentiellement de type polyimide, ayant une perméabilité supérieure à 3,75·10⁻¹⁶ m²/Pa.s. (50 barrer), et une sélectivité en H2 par rapport au CO supérieure à 30. Le barrer est une unité spécifique à la perméation qui s'exprime en unité SI par1 barrer = 7,5 10⁻¹⁸ m²/Pa.s. La température opératoire de chaque unité de séparation est généralement comprise entre 20°C et 250°C.

Le procédé selon la présente invention permet généralement d'atteindre un taux de récupération de l'hydrogène supérieur à 85% en masse avec une teneur en CO dans l'hydrogène obtenu généralement inférieur à 150 ppm, et préférentiellement inférieure à 100 ppm.

Lorsque le gaz de synthèse contenant l'hydrogène à purifier provient d'une unité de vaporeformage comportant un four de vaporeformage, le second retentât (7) issu du procédé selon l'invention peut être utilisé comme combustible dans ledit four de vaporeformage.

Le procédé de purification d'hydrogène selon la présente invention est généralement placé en aval de l'unité de conversion du CO à haute température.

Le procédé de purification d'hydrogène selon la présente invention fait appel à 3 unités de séparation sur membrane (notées U1,U2, U3 sur la figure 1) et consiste en la suite d'étapes suivantes:
On introduit le mélange à traiter (1) dans une première unité de séparation par membrane (U1) de laquelle on extrait:

- un premier perméat (3) constitué essentiellement d'hydrogène qui est envoyé dans une troisième unité de séparation par membrane (U3), après recompression,
- un premier rétentat (4) qui est introduit dans une seconde unité de séparation par membrane (U2) de laquelle on extrait:
- un second perméat (5) qui, après recompression, est recyclé ( flux 6) à l'entrée de la première unité de séparation (U1) en mélange avec le flux à traiter (1) et
- un second rétentat (7),
on extrait de la troisième unité de séparation sur membrane:
- un troisième rétentat (9) qui est recyclé à l'entrée de la première unité de séparation par membrane (U1),
- un troisième perméat (10) constitué d'hydrogène à au moins 99 % de pureté, et contenant au maximum 150 ppm de CO.

Lorsque le gaz de synthèse contenant l'hydrogène à purifier est issu d'une unité de vaporeformage comportant un four de vaporeformage, le second retentât (7) peut être utilisé comme combustible dans ledit four de vaporeformage.

La présente invention peut s'appliquer à un procédé de production d'électricité au moyen d'une pile à combustible, l'hydrogène alimentant ladite pile à combustible étant produit par le procédé selon l'invention.

La présente invention peut également s'appliquer à un procédé de traitement d'huiles dans l'industrie agroalimentaire faisant appel à l'hydrogène produit par le procédé selon l'invention.

### Description détaillée de l'invention

Nous donnons dans cette partie une description du procédé selon la figure 1 correspondant au cas de base faisant appel à 3 unités de séparation par membranes. Ce procédé permet d'obtenir de l'hydrogène purifié à au moins 99 % de pureté avec un taux de récupération pouvant atteindre 86 %.

Le flux (1) est issu d'une unité de WGS haute température après une séparation de l'eau réalisée à basse température (environ 40°C) dans un ballon séparateur (non représenté sur la figure 1).

La composition typique de ce flux (1) est donné ci après en % volumique:
H₂: 74,9
CO: 4,5
H₂O: 0,3
CO₂: 15,7
CH₄: 4,5

Ce flux est disponible à une température comprise entre 40°C et 60°C et à une pression comprise entre 15 et 30 bars. Il est mélangé avec le flux de recyclage (6) issu du perméat de la seconde unité de séparation par membrane (U2) et avec le flux de recyclage (9) issu du retentât de la troisième unité de séparation par membrane (U3) pour constituer le flux (2) qui alimente la première membrane (U1).

La composition typique du flux (2) est donnée dans le tableau ci dessous:
H₂: 76,65
CO: 4,2
H₂O: 0,25
CO₂: 14,7
CH₄: 4,2

Les conditions opératoires de l'unité de séparation (U1) sont les suivantes: Différence de pression entre l'alimentation et le perméat (notée Delta P alimentation/perméat): comprise entre 10 et 20 bars Température comprise entre 20°C et 250°C

Le flux (3) constituant le perméat de l'unité de séparation (U1) est essentiellement constitué d'hydrogène à une pureté supérieure à 98%. Sa teneur en monoxyde de carbone est inférieure à 150 ppm, et préférentiellement inférieure à 100 ppm.. Le flux (3) devenant (8) après recompression dans le compresseur C2 alimente la troisième unité de séparation U3.

Le flux (4) constituant le rétentat de l'unité de séparation (U1) a la composition typique suivante:
H₂: 51,8
CO: 0,6
H₂O: 0,0
CO₂: 38,8
CH₄: 8,8

Ce flux (4) est dirigé vers la seconde unité de séparation sur membrane (U2) qui travaille aux mêmes conditions que l'unité (U1).

Le flux (5) constituant le perméat de l'unité de séparation (U2) est recyclé après compression dans le compresseur (C1). Le flux (6) comprimé est recyclé à l'entrée de la première unité de séparation (U1) en mélange avec le flux (1).

Le flux (7) constituant le rétentat de la seconde unité de séparation par membrane (U2) a la composition typique suivante:
H₂: 31,0
CO: 0,8
H₂O: 0,0
CO₂: 55,5
CH₄: 12,7

Ce flux (7) peut être utilisé comme combustible dans l'unité de vaporeformage placée en amont. La présente invention n'est liée à aucune utilisation particulière de ce flux qui peut, par exemple, être dirigé vers une autre unité de séparation d'hydrogène ou bien encore servir de combustible dans une chaudière ou un four.

Le flux (9), retentât de l'unité de séparation (U3), est recyclé à l'entrée de l'unité de séparation (U1) en mélange avec le flux (1) et le flux (6) pour former le flux (2).

Le flux (10) perméat de l'unité de séparation (U3) est constitué d'hydrogène à 99,5 % de pureté. Le taux de récupération global de l'hydrogène défini comme le rapport du débit d'H₂ dans le flux (10) sur le débit d'H₂ dans le flux entrant (1) est de : 87,9%.

Les membranes mises en oeuvre dans le procédé selon la présente invention sont typiquement "permsélective" à l'hydrogène, ce qui signifie qu'elles sont à la fois perméables et sélectives à l'hydrogène.

Lesdites membranes comprennent au moins un composé de nature polymère, appartenant de manière préférée à la famille des polyimides, des polyamides, des polycarbonates, des polysulfones, des poly(amides imides), des poly(éther sulfones), des polyesters.

Le polymère constitutif de la couche sélective de la membrane considérée peut être un homopolymère, un copolymère, ou un mélange de polymères.

On entend par homopolymère au sens strict, un polymère constitué du même motif de répétition.

On entend par copolymère un polymère constitué d'au moins deux motifs différents, chacun des motifs appartenant à la même famille ou à des familles différentes.

La notion de mélange de polymère doit être comprise comme le mélange physique d'au moins deux polymères, chaque polymère du mélange pouvant être homopolymère ou copolymère.

Les membranes utilisées dans le procédé selon la présente invention sont des membranes de type polymère amorphe, vitreux ou présentant une faible cristallinité. Les membranes utilisées dans la présente invention, outre la présence du polymère, peuvent contenir des charges minérales et organiques et des additifs destinés à améliorer le facteur de séparation et/ou à favoriser la perméabilité.

On peut à titre d'exemple, citer les charges minérales telles que les sels métalliques, les zéolites, les argiles, les composés mésoporeux, les silices natives ou post-traitées, les noirs de carbone, les polymères pyrolysés, les nanotubes de carbones, les dendrimères.

Préférentiellement, lorsqu'une charge minérale est ajoutée au polymère, elle sera de type zéolithe.

Les membranes utilisées dans la présente invention, peuvent également contenir des agents de réticulation permettant une amélioration du facteur de séparation et/ou de la perméabilité.

Les membranes utilisées dans la présente invention peuvent également être traitées chimiquement, thermiquement, ou par rayonnement, permettant ainsi d'améliorer le facteur de séparation et/ou de favoriser la perméabilité.

Les membranes utilisées dans la présente invention peuvent être composites ou non, déposées sur un support ou non supportées, asymétriques ou non. Elles peuvent se présenter sous forme de fibres creuses, ou sous forme de films intégrés dans un module plan ou dans un module spiralé.

Les performances des membranes sont usuellement décrites par deux paramètres, la perméabilité et la sélectivité. La perméabilité est définie comme le flux de matière traversant la membrane, multiplié par l'épaisseur de ladite membrane, et rapporté à la différence de pression partielle des composés traversant la membrane appliquée entre les faces amont et aval de ladite membrane.

La sélectivité de la membrane pour le constituant A par rapport au constituant B est définie comme le rapport des perméabilités des deux constituants A sur B.

La perméabilité est mesurée en barrer (1 barrer = 7,5 10⁻¹⁸ m²/Pa.s. ).

Dans le cadre de la présente invention les membranes utilisées ont une perméabilité supérieure à 1,5·10⁻¹⁶ m²/Pa.s. (20 barrer), et préférentiellement supérieure à 3,75·10⁻¹⁶ m²/Pa.s. (50 barrer).

La sélectivité de la membrane en H2 par rapport au CO est généralement supérieure à 30, et préférentiellement supérieure à 50.

### Exemple

L'exemple fourni permet d'illustrer la production d'hydrogène à un niveau de pureté supérieur à 99% à partir d'un gaz de synthèse après passage dans une unité de WGS à haute température.

L'exemple correspond au procédé selon l'invention avec 3 unités de séparation sur membrane et sans unité de conversion du CO à basse température, le procédé étant plaçé immédiatement en aval de l'unité de conversion du CO ( WGS) à haute température.

L'exemple correspond au procédé de la figure 1.

Le tableau 1 suivant récapitule les débits de chacun des flux ainsi que leur composition :

**tableau 1 : récapitulatif des flux de l'exemple**

| Flux | 1 | 2 | 3 | 4 | 5 | 6 | 7 | 8 | 9 | 10 |
|---|---|---|---|---|---|---|---|---|---|---|
| Température (°C) | 38 | 40 | 40 | 40 | 40 | 60 | 40 | 45 | 45 | 45 |
| Pression (bar abs.) | 23 | 23 | 5,4 | 23 | 5,4 | 23 | 23 | 23 | 23 | 5 |
| Débit total (kilo moles/h) | 3,78 | 4,35 | 2,71 | 1,64 | 0,36 | 0,36 | 1,28 | 2,71 | 0,21 | 2,5 |
| Composition (% vol.) | | | | | | | | | | |
| | 74,86 | 76,75 | 98,22 | 41,23 | 93,07 | 93,07 | 26,65 | 98,22 | 82,60 | 99,49 |
| H₂ | 4,55 | 4,17 | 0,21 | 10,72 | 1,06 | 1,06 | 13,44 | 0,21 | 2,67 | 0,01 |
| CO | 0,29 | 0,25 | 0,40 | 0 | 0 | 0 | 0 | 0,40 | 0 | 0,43 |
| H₂O | 15,75 | 14,66 | 0,96 | 37,32 | 4,80 | 4,80 | 46,47 | 0,96 | 12,04 | 0,06 |
| CO₂ | 4,55 | 4,17 | 0,21 | 10,73 | 1,07 | 1,07 | 13,45 | 0,21 | 2,69 | 0,01 |
| CH₄ | | | | | | | | | | |

L'unité de séparation (U1) est constituée d'une membrane de 20,1 m2 de surface, ce qui lui permet ainsi d'opérer avec un taux de récupération de l'hydrogène de 79,7 %. L'unité de séparation (U2) est constituée d'une membrane de 7,7 m2 de surface, et opère avec un taux de récupération de l'hydrogène de 49,6 %.

L'unité de séparation (U3) est constituée d'une membrane de 10,4 m2 de surface, et opère avec un taux de récupération de l'hydrogène de 93,4 %.

La membrane utilisée pour les unités de séparation (U1) et (U2) et (U3) est une membrane polymère de la famille des polyimides ayant une perméabilité de 70 barrer, et une sélectivité en H2 par rapport au CO de 55.

La différence de pression au passage de l'unité de séparation (U1), de l'unité de séparation (U2) et de l'unité de séparation (U3) est de 18 bars.

Au final, le procédé produit un flux d'hydrogène avec une pureté supérieure à 99%, une teneur en CO de 100 ppm, et un taux de récupération de 87,9 %.

## Revendications

1. Procédé de purification d'hydrogène contenu dans un gaz de synthèse contenant moins de 5000 ppm de CO, le procédé faisant appel à 3 unités de séparation sur membrane (U1,U2,U3) et consistant en la suite d'étapes suivantes:
on introduit le mélange à traiter (1) dans une première unité de séparation par membrane (U1) de laquelle on extrait:
- un premier perméat (3) constitué essentiellement d'hydrogène qui est envoyé dans une troisième unité de séparation par membrane (U3) après recompression,
- un premier rétentat (4) qui est introduit dans une seconde unité de séparation par membrane (U2) de laquelle on extrait:
- un second perméat (5) qui après recompression est recyclé à l'entrée de la première unité de séparation (U1) en mélange avec le flux à traiter (1) et
- un second rétentat (7),
on extrait de la troisième unité de séparation sur membrane:
- un troisième rétentat (9) qui est recyclé à l'entrée de la première unité de séparation par membrane (U1) en mélange avec le flux à traiter (1),
- un troisième perméat (10) constitué d'hydrogène à au moins 98 % de pureté, et contenant au maximum 150 ppm de CO.

2. Procédé de purification d'hydrogène selon la revendication 1, dans lequel la différence de pression entre l'amont et l'aval de chaque unité de séparation par membrane est comprise entre 5 et 50 bars, et préférentiellement comprise entre 10 et 30 bars.

3. Procédé de purification d'hydrogène selon l'une quelconque des revendications 1 à 2, dans lequel la membrane de chacune des unités de séparation est une membrane polymère, préférentiellement de type polyimide, ayant une perméabilité supérieure à 50 barrer, soit 375 10⁻¹⁸ m²/Pa.s, et une sélectivité en H2 par rapport au CO supérieure à 30.

4. Procédé de purification d'hydrogène selon l'une quelconque des revendications 1 à 3, dans lequel la membrane de chacune des unités de séparation est une membrane polymère appartenant à au moins une des familles suivantes: polyimides, polyamides, polycarbonates, polysulfones, poly(amides imides), poly(éther sulfones), polyesters.

5. Procédé de purification d'hydrogène selon l'une quelconque des revendications 1 à 4, dans lequel la température opératoire de chaque unité de séparation est comprise entre 20°C et 250°C.

6. Procédé de purification d'hydrogène selon l'une quelconque des revendications 1 à 5, dans lequel le taux de récupération de l'hydrogène est supérieur à 85% en masse.

7. Procédé de purification d'hydrogène selon l'une quelconque des revendications 1 à 6 dans lequel, lorsque le gaz de synthèse est produit par vaporeformage, le second retentât (7) est utilisé comme combustible dans ledit four de vaporeformage.

## Claims

1. Process for the purification of hydrogen contained in a synthesis gas, whereby the synthesis gas contains less than 5,000 ppm of CO and whereby the process relies on three membrane separation units (U1, U2, U3) and consists hereinafter of the following stages:
The mixture to be processed (1) is introduced into a first membrane separation unit (U1), from which there is extracted:
- A first permeate (3) that consists essentially of hydrogen that is sent into a third membrane separation unit (U3), after recompression,
- A first retentate (4) that is introduced into a second membrane separation unit (U2) from which there is extracted:
- A second permeate (5), which, after recompression, is recycled to the inlet of the first separation unit (U1) in a mixture with the flow to be processed (1), and
- A second retentate (7);
from the third membrane separation unit, there is extracted:
- A third retentate (9) that is recycled to the inlet of the first membrane separation unit (U1) in a mixture with the flow to be processed (1),
- A third permeate (10) that consists of hydrogen with at least 98% purity and that contains at most 150 ppm of CO.

2. Hydrogen purification process according to claim 1, in which the pressure difference between the upstream and the downstream of each membrane separation unit is between 5 and 50 bar, and preferably between 10 and 30 bar.

3. Hydrogen purification process according to any of claims 1 to 2, in which the membrane of each of the separation units is a polymer membrane, preferably of the polyimide type, having a permeability of more than 50 Barrer, that is to say 375 10 ⁻¹⁶ m2/Pa.s and an H2 selectivity relative to the CO of more than 30.

4. Hydrogen purification process according to any of claims 1 to 3, in which the membrane of each of the separation units is a polymer membrane that belongs to at least one of the following families: polyimides, polyamides, polycarbonates, polysulfones, poly(amide imides), poly(ether sulfones), polyesters.

5. Hydrogen purification process according to any of claims 1 to 4, in which the operating temperature of each separation unit is between 20°C and 250°C.

6. Hydrogen purification process according to any of claims 1 to 5, in which the hydrogen recovery level is more than 85% by mass.

7. Hydrogen purification process according to any of claims 1 to 6, in which, when the synthesis gas is produced by vapor reforming, the second retentate (7) is used as a fuel in said vapor-reforming furnace.

## Patentansprüche

1. Verfahren zur Reinigung von Wasserstoff, der in einem Synthesegas enthalten ist, das weniger als 5.000 ppm CO enthält, wobei das Verfahren 3 Einheiten zur Membrantrennung (U1, U2, U3) nutzt und aus der Abfolge der folgenden Schritte besteht:
Einführen des zu behandelnden Gemisches (1) in eine erste Membrantrennungseinheit (U1), aus der Folgendes extrahiert wird:
- ein erstes Permeat (3), das im Wesentlichen aus Wasserstoff besteht, der nach Rekompression in eine dritte Membrantrennungseinheit (U3) geschickt wird,
- ein erstes Retentat (4), das in eine zweite Membrantrennungseinheit (U2) eingeführt wird, aus der Folgendes extrahiert wird:
- ein zweites Permeat (5), das nach Rekompression als Gemisch mit dem zu behandelnden Strom (1) an den Eingang der ersten Trennungseinheit (U1) zurückgeschickt wird, und
- ein zweites Retentat (7),
Extrahieren aus der dritten Membrantrennungseinheit:
ein drittes Retentat (9), das als Gemisch mit dem zu behandelnden Strom (1) an den Eingang der ersten Membrantrennungseinheit (U1) zurückgeschickt wird,
- ein drittes Permeat (10), das aus Wasserstoff mit mindestens 98 % Reinheit besteht und maximal 150 ppm CO enthält.

2. Verfahren zur Reinigung von Wasserstoff nach Anspruch 1, wobei der Druckunterschied stromaufwärts und stromabwärts jeder Membrantrennungseinheit im Bereich zwischen 5 und 50 bar, und vorzugsweise im Bereich zwischen 10 und 30 bar liegt.

3. Verfahren zur Reinigung von Wasserstoff nach einem der Ansprüche 1 bis 2, wobei die Membran jeder der Trennungseinheiten eine Polymermembran, vorzugsweise vom Typ Polyimid ist, die eine Permeabilität von mehr als 50 barrer, d. h. 375.10⁻¹⁸ m²/Pa.s, und eine H2-Selektivität bezogen auf CO von mehr als 30 aufweist.

4. Verfahren zur Reinigung von Wasserstoff nach einem der Ansprüche 1 bis 3, wobei die Membran jeder der Trennungseinheiten eine Polymermembran ist, die zu mindestens einer der folgenden Familien gehört: Polyimide, Polyamide, Polycarbonate, Polysulfone, Poly(amidimide), Poly(ethersulfone), Polyester.

5. Verfahren zur Reinigung von Wasserstoff nach einem der Ansprüche 1 bis 4, wobei die Betriebstemperatur jeder Trennungseinheit im Bereich zwischen 20 °C und 250 °C liegt.

6. Verfahren zur Reinigung von Wasserstoff nach einem der Ansprüche 1 bis 5, wobei der Prozentsatz der Wasserstoffrückgewinnung höher als 85 Massen-% ist.

7. Verfahren zur Reinigung von Wasserstoff nach einem der Ansprüche 1 bis 6, wobei das zweite Retentat (7), wenn das Synthesegas mittels Dampfreformierung produziert wird, als Brennstoff in der Dampfreformierungsanlage verwendet wird.
